# EUROPEAN PATENT APPLICATION

(11) **EP 3 064 799 A1**
(43) Date of publication of application: **07.09.2016**
(21) Application number: 16151109.2
(22) Date of filing: 13.01.2016
(51) Int. Cl.: F16F 9/46

(54) **PRESSURE SHOCK ABSORBER**

(30) Priority: 13.01.2015 JP 2015004340
(71) Applicant: Showa Corporation, Gyoda City Saitama 361-8506 (JP)
(72) Inventor: Nakano, Gota, Saitama, 361-8506 (JP)
(74) Representative: Nordmeyer, Philipp Werner

(57) **Abstract**

A pressure shock absorber includes: a cylinder (11) accommodating a fluid; a partitioning portion (44) that is provided so as to be capable of being moved in the cylinder in an axial direction, and partitions an inner space of the cylinder into a first chamber (Y1) and a second chamber (Y2); a flow path forming portion (41) forming a first flow path (411) through along with the movement of the partitioning portion; a valve (42) controlling the flowing of the fluid through the first flow path; a second flow path (32c) configured to form a fluid flow passage; a forward and rearward moving portion (64) that is moved forward and rearward along one direction; and a changing unit (65) that includes a rotator (67) rotated by a predetermined amount of rotation along with the forward and rearward movement of the forward and rearward moving portion, and changes a flow direction of the fluid in the second flow path.

## Description

### BACKGROUND OF THE INVENTION

### 1. Field of the Invention

The present invention relates to a pressure shock absorber.

### 2. Description of Related Art

A suspension apparatus of a vehicle such as an automobile includes a pressure shock absorber that dampens vibration transmitted to a vehicle body from a road surface during traveling. A pressure shock absorber capable of changing the magnitude of a generated damping force is known (refer to JP-A-2014-185774).

### SUMMARY OF THE INVENTION

In the pressure shock absorber capable of changing magnitude of damping force, preferably, a predetermined damping force is stably generated by a mechanism.

An object of the present invention is to provide a pressure shock absorber capable of changing the magnitude of damping force, which stably generates damping force.

According to an aspect of the present invention, there is provided a pressure shock absorber including: a cylinder configured to accommodate a fluid; a partitioning portion that is provided so as to be capable of being moved in the cylinder in an axial direction, and partitions an inner space of the cylinder into a first chamber and a second chamber; a flow path forming portion configured to form a first flow path through which the fluid flows along with the movement of the partitioning portion; a valve configured to control the flowing of the fluid through the first flow path; a second flow path configured to form a fluid flow passage different from the first flow path of the flow path forming portion; a forward and rearward moving portion that is moved forward and rearward along one direction; and a changing unit that includes a rotator rotated by a predetermined amount of rotation along with the forward and rearward movement of the forward and rearward moving portion, and changes a flow direction of the fluid in the second flow path.

In this configuration, the flow direction of the fluid in the second flow path is changed by rotating the rotator by the predetermined amount of rotation, thereby allowing stable generation of damping force.

According to another aspect of the present invention, there is provided a pressure shock absorber including: a cylinder configured to accommodate a fluid; a partitioning portion that is provided so as to be capable of being moved in the cylinder in an axial direction, and partitions an inner space of the cylinder into a first chamber and a second chamber; a flow path forming portion configured to form a first flow path through which the fluid flows along with the movement of the partitioning portion; a valve configured to control the flowing of the fluid through the first flow path; a forward and rearward moving portion that is moved forward and rearward along one direction; and a damping force changing unit that includes a rotator rotated along with the forward and rearward movement of the forward and rearward moving portion, and a maintaining portion maintaining a position of the rotator, and changes magnitude of generated damping force according to the position of the rotator.

In this configuration, the position of the rotator is maintained, and the magnitude of the generated damping force is changed, thereby allowing stable generation of damping force.

In a pressure shock absorber capable of changing the magnitude of damping force according to the present invention, it is possible to stably generate damping force.

### BRIEF DESCRIPTION OF THE DRAWINGS

Fig. 1 is a view illustrating the entire configuration of a hydraulic shock absorber in Configuration Example 1.
Fig. 2 is a sectional view of a piston unit in Configuration Example 1.
Fig. 3 is a view illustrating a damping force adjusting unit in detail.
Fig. 4 is a view illustrating a knock cam mechanism unit in the configuration example.
Figs. 5A to 5F are views illustrating the operation of the damping force adjusting unit.
Figs. 6A to 6C are views illustrating the operation of the hydraulic shock absorber in Configuration Example 1.
Fig. 7 is a sectional view of a piston unit in Configuration Example 2.
Figs. 8A to 8C are views illustrating the operation of a hydraulic shock absorber in Configuration Example 2.
Fig. 9 is a sectional view of a piston unit in Configuration Example 3.
Fig. 10 is a view illustrating the entire configuration of a hydraulic shock absorber in Configuration Example 4.
Fig. 11 is a view illustrating the entire configuration of a hydraulic shock absorber in Configuration Example 5.

### DESCRIPTION OF EMBODIMENTS

Hereinafter, an embodiment of the present invention will be described in detail with reference to the accompanying drawings.

### Configuration Example 1

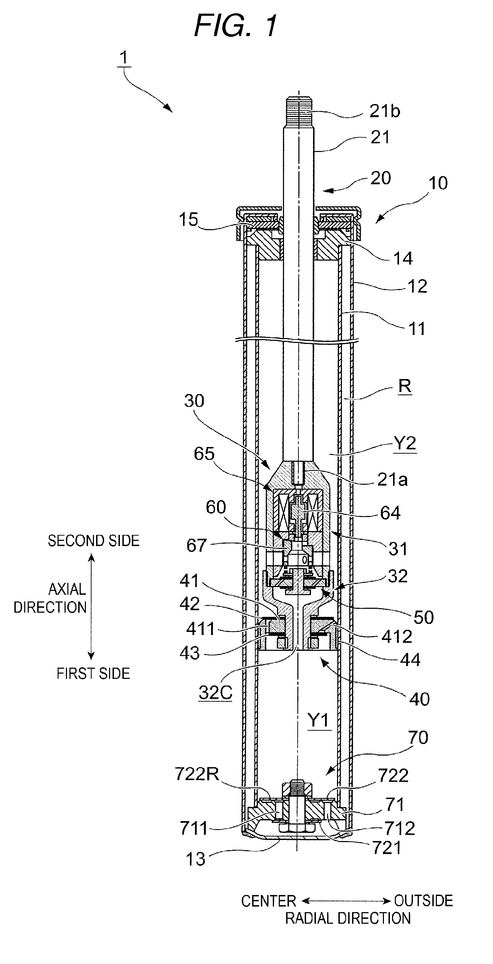

Fig. 1 is a view illustrating the entire configuration of a hydraulic shock absorber 1 in Configuration Example 1.

In the following description, a "first side" and a "second side" respectively refer to a lower side and an upper side of the hydraulic shock absorber 1 in an axial direction illustrated in Fig. 1. The "center in a radial direction" and the "outside in a radial direction" respectively refer to the center and the outside of the hydraulic shock absorber 1 in a radial direction.

### Configuration and Function of Hydraulic Shock Absorber 1

As illustrated in Fig. 1, the hydraulic shock absorber (pressure shock absorber) 1 includes a cylinder unit 10; a rod unit 20, the second side of which protrudes to the outside of the cylinder unit 10, and the first side of which is slidably inserted into the cylinder unit 10; a piston unit 30 provided in a first side end portion of the rod unit 20; and a bottom valve unit 70 disposed in a first side end portion of the cylinder unit 10.

The hydraulic shock absorber 1 is provided between a vehicle body and an axle of a four-wheeled vehicle, a two-wheeled vehicle, or the like, and dampens the magnitude motion of the rod unit 20 with respect to the cylinder unit 10.

The schematic configuration of the hydraulic shock absorber 1 in the configuration example will be described.

As illustrated in Fig. 1, the hydraulic shock absorber (pressure shock absorber) 1 in Configuration Example 1 includes a cylinder 11 accommodating oil (fluid); a piston ring (partitioning portion) 44 that is provided so as to be capable of being moved in the cylinder 11 in the axial direction, and partitions the inner space of the cylinder 11 into a first oil chamber (first chamber) Y1 and a second oil chamber (second chamber) Y2; a first piston (flow path forming portion) 41 that forms a first compression side oil path (first flow path) 411 and a first expansion side oil path (first flow path) 412 through which the oil flows along with the movement of the piston ring 44; a first compression side damping valve 42 and a first expansion side damping valve 43 which control the flowing of the oil through the first compression side oil path 411 and the first expansion side oil path 412; a hollow portion (second flow path) 32C that forms an oil flow passage different from the first compression side oil path 411 and the first expansion side oil path 412 of the first piston 41; a plunger (forward and rearward moving portion) 64 that is moved forward and rearward along one direction; and a knock cam mechanism unit (changing unit) 65 that includes a rotator 67 rotated by a predetermined amount of rotation along with the forward and rearward movement of the plunger 64, and changes the flow direction of the oil in the hollow portion 32C.

Hereinafter, each of these configuration elements will be described in detail.

The cylinder unit 10 includes the cylinder 11; an outer cylindrical body 12 provided on the outside of the cylinder 11; and a bottom portion 13 provided in a first side end portion of the outer cylindrical body 12. In the configuration example, a reservoir chamber R for storing oil is formed between the cylinder 11 and the outer cylindrical body 12.

The cylinder unit 10 includes a rod guide 14 provided in a second side end portion of the cylinder 11, and a sealing member 15 closing a second side end portion of the outer cylindrical body 12.

In the configuration example, the rod unit 20 includes a rod member 21 extending in the axial direction; a first side mounting portion 21 a provided in a first side end portion of the rod member 21; and a second side mounting portion 21 b provided in a second side end portion of the rod member 21.

The first side mounting portion 21 a of the rod member 21 holds the piston unit 30. A connecting member (not illustrated) is mounted to the second side mounting portion 21 b of the rod member 21, and the hydraulic shock absorber 1 is connected to a vehicle body or the like of an automobile or the like, via the connecting member.

The piston unit 30 includes a first housing 31; a second housing 32 provided on the first side of the first housing 31; a first piston unit 40 provided on the first side of the second housing 32; a second piston unit 50 provided on the inside and the first side of the first housing 31; and a damping force adjusting unit 60 provided on the inside of the first housing 31 and on the second side of the second piston unit 50. Each configuration element of the piston unit 30 will be described in detail later.

In the configuration example, the first piston unit 40 of the piston unit 30 partitions the inner space of the cylinder 11 into the first oil chamber Y1 and the second oil chamber Y2, both of which accommodate oil. In the configuration example, the first oil chamber Y1 is formed on the first side of the first piston unit 40, and the second oil chamber Y2 is formed on the second side of the first piston unit 40.

The bottom valve unit 70 includes a valve body 71 including multiple compression side oil paths 711 that pass through the valve body 71 in the axial direction, and multiple expansion side oil paths 712 that are disposed on the outside of the compression side oil paths 711 in the radial direction and pass through the valve body 71; a compression side valve 721 provided on the first side of the valve body 71; and an expansion side valve 722 provided on the second side of the valve body 71. The expansion side valve 722 includes oil holes 722R positioned in the radial direction to respectively correspond to the compression side oil paths 711.

The bottom valve unit 70 is provided on a first side end portion of the hydraulic shock absorber 1, and separates the first oil chamber Y1 from the reservoir chamber R. Configuration and Function of Piston Unit 30

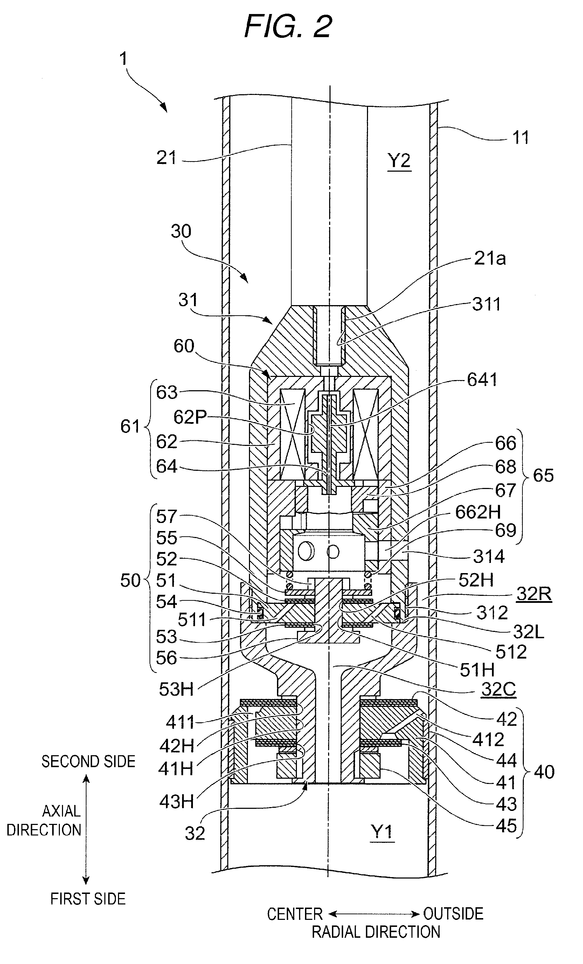

Fig. 2 is a sectional view of the piston unit 30 in Configuration Example 1. First Housing 31

The first housing 31 is a hollow member including an opening on the first side. The first housing 31 includes a rod connecting portion 311 provided on the second side of the first housing 31; a housing connecting portion 312 provided on the first side of the first housing 31; and an opening portion 314 provided on the second side of the housing connecting portion 312.

The first housing 31 has an outer diameter smaller than the inner diameter of the cylinder 11.

The rod connecting portion 311 is a portion passing through the first housing 31 in the axial direction. The first side end portion of the rod unit 20 is inserted into the rod connecting portion 311. The rod connecting portion 311 is fixed to the first side mounting portion 21 a of the rod member 21.

The housing connecting portion 312 forms a connecting portion connected to the second housing 32.

The opening portion 314 is an opening that opens in the radial direction. Multiple (three in the configuration example) opening portions 314 are provided in the first housing 31 in a circumferential direction. The multiple opening portions 314 are disposed so as to be equally spaced apart from each other in the circumferential direction. Each of the opening portions 314 communicates with an opening portion 662H (to be described later) of the damping force adjusting unit 60 positioned close to the center in the radial direction, and communicates with the second oil chamber Y2 on the outside in the radial direction.

A through hole may be provided in the first housing 31. For example, when oil contains air bubbles, the air bubbles may be discharged to the outside of the first housing 31 via the through hole.

### Second Housing 32

The second housing 32 is a hollow member including the hollow portion 32C. The second housing 32 has a second side inner diameter and a second side outer diameter larger than a first side inner diameter and a first side outer diameter. The second housing 32 has an outer diameter smaller than the inner diameter of the cylinder 11. Accordingly, in the configuration example, an oil path 32R external to the housing, that is, an oil flow passage, is formed between the second housing 32 and the cylinder 11.

The first piston unit 40 is fixed to a first side outer circumferential portion of the second housing 32. The first housing 31 is fixed to a second side inner circumferential portion of the second housing 32.

A stepped portion 32L is formed in the second side inner circumferential portion of the second housing 32. The stepped portion 32L has a surface facing the second side, and supports the second piston unit 50. In the configuration example, the second piston unit 50 is interposed between the first side of the first housing 31 and the second side of the second housing 32. Accordingly, the first housing 31 and the second housing 32 support the second piston unit 50.

### First Piston Unit 40

As illustrated in Fig. 2, the first piston unit 40 includes a first piston 41; a first compression side damping valve 42 provided on the second side of the first piston 41; a first expansion side damping valve 43 provided on the first side of the first piston 41; the piston ring 44 provided on the outside of the first piston 41 in the radial direction; and a nut 45 provided on the first side of the first expansion side damping valve 43.

The first piston 41 is a substantially column-shaped member including an opening portion 41 H through which the second housing 32 passes. The first piston 41 includes multiple first compression side oil paths 411 formed on the outside in the radial direction to extend in the axial direction, and multiple first expansion side oil paths 412 formed on the outside in the radial direction to extend substantially in the axial direction.

The first compression side damping valve 42 is formed of a disc-shaped metal member including an opening portion 42H through which the second housing 32 passes. The first compression side damping valve 42 is capable of opening and closing the second side of the first compression side oil path 411 of the first piston 41, and the second side of the first expansion side oil path 412 is always open.

The first expansion side damping valve 43 is formed of a disc-shaped metal member including an opening portion 43H through which the second housing 32 passes. The first expansion side damping valve 43 is capable of opening and closing the first side of the first expansion side oil path 412 of the first piston 41, and the first side of the first compression side oil path 411 is always open.

The piston ring 44 seals the gap between the cylinder 11 and the first piston 41. The piston ring 44 improves slidability of the first piston 41 with respect to the cylinder 11 when the first piston 41 moves with respect to the cylinder 11 in the axial direction.

The nut 45 presses and fixes the first piston 41, the first compression side damping valve 42, and the first expansion side damping valve 43 to the second housing 32.

### Second Piston 50

As illustrated in Fig. 2, the second piston unit 50 includes a second piston (second flow path forming portion) 51; a second compression side damping valve (second valve) 52 provided on the second side of the second piston 51; a second expansion side damping valve (second valve) 53 provided on a first side end portion of the second piston 51; a sealing member 54 provided on the outside of the second piston 51 in the radial direction; a support member 55 provided on the second side of the second compression side damping valve 52; a bolt 56; and a nut 57.

The second piston 51 is a substantially column-shaped member including an opening portion 51 H through which the bolt 56 passes. The second piston 51 includes multiple second compression side oil paths 511 formed on the outside in the radial direction to extend in the axial direction, and multiple second expansion side oil paths 512 formed on the outside in the radial direction to extend substantially in the axial direction.

The second compression side damping valve 52 is formed of a disc-shaped metal member including an opening portion 52H through which the bolt 56 passes. The second compression side damping valve 52 is capable of opening and closing the second side of the second compression side oil path 511 of the second piston 51, and the second side of the second expansion side oil path 512 is always open.

The second expansion side damping valve 53 is formed of a disc-shaped metal member including an opening portion 53H through which the bolt 56 passes. The second expansion side damping valve 53 is capable of opening and closing the first side of the second expansion side oil path 512 of the second piston 51, and the first side of the second compression side oil path 511 is always open.

The sealing member 54 seals the gap between the second piston 51 and the first housing 31.

The second side of the support member 55 is in contact with a spring 69. The support member 55 supports the spring 69 from the first side. The second piston 51, the second compression side damping valve 52, the second expansion side damping valve 53, and the support member 55 are interposed between the bolt 56 and the nut 57 in the axial direction.

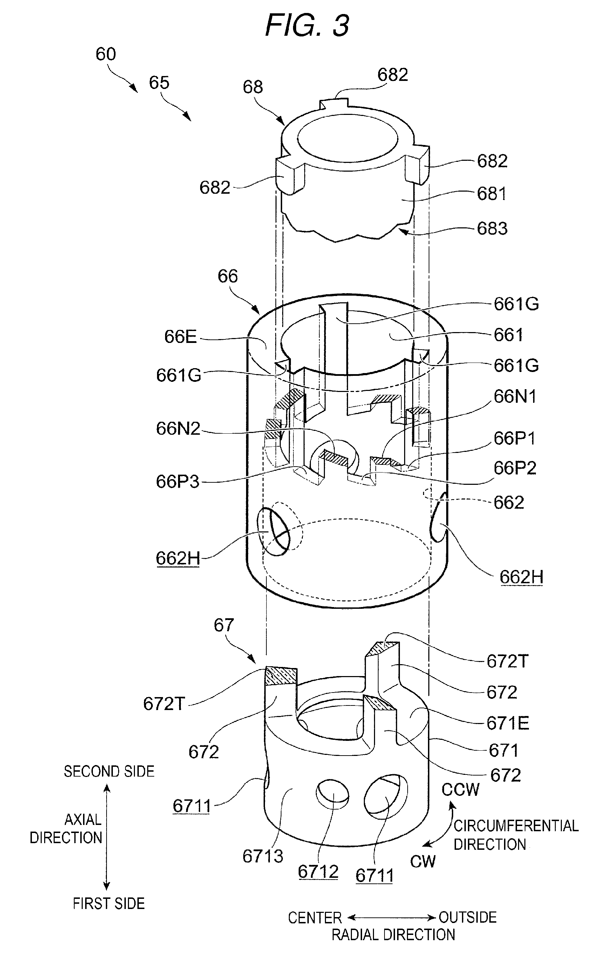

Fig. 3 is a view illustrating the damping force adjusting unit 60 in detail.

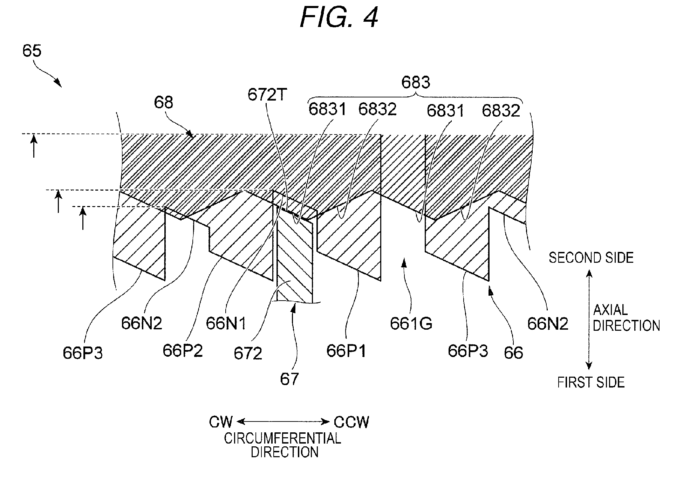

Fig. 4 is a view illustrating the knock cam mechanism unit 65 in the configuration example.

### Damping Force Adjusting Unit 60

As illustrated in Fig. 2, the damping force adjusting unit 60 includes a solenoid unit 61, and the knock cam mechanism unit 65 provided on the first side of the solenoid unit 61.

### Solenoid Unit 61

The solenoid unit 61 includes a solenoid housing 62; a coil 63 provided close to the center of the solenoid housing 62 in the radial direction; and the plunger 64 provided at the center of the coil 63 in the radial direction. In the configuration example, a so-called push solenoid is used as the solenoid unit 61.

The solenoid housing 62 is inserted into the first housing 31. The solenoid housing 62 holds the coil 63. The solenoid housing 62 includes a plunger accommodating portion 62P that accommodates the plunger 64. The plunger accommodating portion 62P supports the plunger 64 in such a way that the plunger 64 can be moved in the axial direction.

In the configuration example, the plunger 64 includes a through hole 641 passing through the plunger 64 in the axial direction. The through hole 641 serves to prevent the occurrence of the difference in the pressure of oil between the first side and the second side of the plunger 64. Accordingly, in the configuration example, the plunger 64 is easily moved in the axial direction.

The coil 63 is controlled by a controller (not illustrated) via conductive wires (not illustrated). When the coil 63 is energized, the coil 63 generates a magnetic field.

The plunger 64 is moved forward and rearward along one direction, which is the axial direction in the configuration example, by the magnetic field generated by the coil 63.

### Knock Cam Mechanism Unit 65

As illustrated in Fig. 2, the knock cam mechanism unit 65 includes a knock housing 66; the rotator 67 provided close to the center of the knock housing 66 in the radial direction; a knock cam 68 provided on the second side of the rotator 67; and the spring 69 provided on the first side of the rotator 67.

As illustrated in Fig. 3, the knock housing 66 is a substantially cylinder-shaped member. A first inner-diameter portion 661 is formed on the second side of the knock housing 66. A second inner-diameter portion 662 is formed on the first side of the knock housing 66, and has an inner diameter larger than that of the first inner-diameter portion 661.

The first inner-diameter portion 661 has an inner diameter larger than the outer diameter of the knock cam 68. The knock cam 68 is fitted on the inside of the first inner-diameter portion 661 such that the knock cam 68 can be moved in the axial direction.

A guide groove 661 G, a first protruding portion 66P1, a first recessed portion 66N1, a second protruding portion 66P2, a second recessed portion 66N2, and a third protruding portion 66P3 are sequentially formed in the first inner-diameter portion 661 in a circumferential clockwise (CW) rotational direction. In the configuration example, the guide grooves 661 G, three first protruding portions 66P1, three first recessed portions 66N1, three second protruding portions 66P2, three second recessed portions 66N2, and three third protruding portions 66P3 are provided. The first protruding portions 66P1, the first recessed portions 66N1, the second protruding portions 66P2, the second recessed portions 66N2, and the third protruding portions 66P3 (rotator fixing portions) fix the rotational position of the rotator 67.

Each of the guide groove 661 G is formed from a second side end portion 66E to a substantially central portion in the knock housing 66 in the axial direction. In the configuration example, the guide groove 661 G is provided at the same circumferential phase as the opening portion 662H (to be described later). That is, the guide groove 661 G and the opening portion 662H are disposed to be lined up straight in the axial direction. In the configuration example, multiple guide grooves 661 G are disposed so as to be substantially equally spaced apart from each other in the circumferential direction.

A guided portion 682 (to be described later) of the knock cam 68 is always fitted into the guide groove 661 G such that the guided portion 682 can be moved in the axial direction. Upon facing the guide groove 661 G, a protruding portion 672 of the rotator 67 (to be described later) is fitted into the guide groove 661 G.

The first recessed portion 66N1 is disposed on the clockwise (CW) rotational side of the guide groove 661 G. In the configuration example, multiple first recessed portions 66N1 are disposed so as to be substantially equally spaced apart from each other in the circumferential direction of the knock housing 66. Upon facing the first recessed portion 66N1, the protruding portion 672 is fitted into the first recessed portion 66N1.

The second recessed portion 66N2 is disposed on the clockwise (CW) rotational side of the first recessed portion 66N1. In the configuration example, multiple second recessed portions 66N2 are disposed so as to be substantially equally spaced apart from each other in the circumferential direction of the knock housing 66. Upon facing the second recessed portion 66N2, the protruding portion 672 is fitted into the second recessed portion 66N2.

As illustrated in Fig. 4, in the configuration example, the first recessed portion 66N1, the second recessed portion 66N2, and the guide groove 661 G are formed to have different depths which are recessed to the second side in the axial direction. In the configuration example, the depths of the second recessed portion 66N2, the first recessed portion 66N1, and the guide groove 661 G are increased in the listed sequence.

The first protruding portion 66P1 is provided between the guide groove 661 G and the first recessed portion 66N1. The first protruding portion 66P1 is inclined in the circumferential direction. In the configuration example, the first protruding portion 66P1 is formed such that the height of the first protruding portion 66P1 protruding to the first side is decreased in the clockwise (CW) rotational direction.

The second protruding portion 66P2 is provided between the first recessed portion 66N1 and the second recessed portion 66N2. The second protruding portion 66P2 is inclined in the circumferential direction. In the configuration example, the second protruding portion 66P2 is formed such that the height of the second protruding portion 66P2 protruding to the first side is decreased in the clockwise (CW) rotational direction.

The third protruding portion 66P3 is provided between the second recessed portion 66N2 and the guide groove 661 G. The third protruding portion 66P3 is inclined in the circumferential direction. In the configuration example, the third protruding portion 66P3 is formed such that the height of the third protruding portion 66P3 protruding to the first side is decreased in the clockwise (CW) rotational direction.

As illustrated in Fig. 3, the second inner-diameter portion 662 is formed to have an inner diameter larger than the outer diameter of the rotator 67. The rotor 67 is fitted on the inside of the second inner-diameter portion 662 such that the rotor 67 can be moved in the axial direction. The second inner-diameter portion 662 includes the opening portions 662H passing through the second inner-diameter portion 662 in the radial direction.

The opening portion 662H is formed to face the opening portion 314 of the first housing 31 when the piston unit 30 is assembled to the first housing 31. Multiple (three in the configuration example) opening portions 662H are provided. The opening portion 662H always faces the opening portion 314 on the outside in the radial direction. According to the rotational position of the rotator 67, the opening portion 662H faces any one of a first opening portion 6711, a second opening portion 6712, and a blocked portion 6713 (to be described later) positioned close to the center in the radial direction.

The rotator 67 includes a cylindrical portion 671 having a substantially cylindrical shape, and a protruding portion 672 protruding from an end portion 671 E of the cylindrical portion 671 toward the second side in the axial direction.

The cylindrical portion 671 includes the first opening portion 6711; the second opening portion 6712; and the blocked portion 6713.

The first opening portion 6711 is formed into substantially the same shape as the opening portion 662H. Multiple (three in the configuration example) first opening portions 6711 are provided. The first opening portion 6711 faces the opening portion 662H according to the relative rotational position between the knock housing 66 and the rotator 67. In the configuration example, the first opening portion 6711 is provided at the same circumferential phase as the protruding portion 672. That is, the first opening portion 6711 and the protruding portion 672 are disposed to be lined up straight in the axial direction of the knock housing 66.

The second opening portion 6712 is formed to have an opening area smaller than that of the first opening portion 6711. Accordingly, the second opening portion 6712 has an opening area smaller than that of the opening portion 662H. Multiple (three in the configuration example) second opening portions 6712 are provided. The second opening portion 6712 is provided on the clockwise (CW) rotational side of the first opening portion 6711 while being adjacent to the first opening portion 6711. The second opening portion 6712 faces the opening portion 662H according to the relative rotational position between the knock housing 66 and the rotator 67.

The blocked portion 6713 is provided on the clockwise (CW) rotational side of the second opening portion 6712 while being adjacent to the second opening portion 6712. Multiple (three in the configuration example) blocked portions 6713 are provided. The blocked portion 6713 faces the opening portion 662H according to the relative rotational position between the knock housing 66 and the rotator 67.

An inclined surface 672T is formed in a second side end portion of the protruding portion 672. The inclined surface 672T is inclined in the circumferential direction. In the configuration example, as illustrated in Fig. 4, the height of the protruding portion 672 protruding to the second side is increased in the clockwise (CW) rotational direction.

The protruding portion 672 faces any one of the guide groove 661 G, the first recessed portion 66N1, and the second recessed portion 66N2 on the outside in the radial direction. Upon facing any one of the guide groove 661 G, the first recessed portion 66N1, and the second recessed portion 66N2, the protruding portion 672 is fitted thereinto. The protruding portion 672 is in contact with a cam portion 683 (to be described later) of the knock cam 68 at a position close to the center in the radial direction.

In the configuration example, a positional relationship among the protruding portion 672, the first opening portion 6711, the second opening portion 6712, the blocked portion 6713, the guide groove 661 G, the first recessed portion 66N1, the second recessed portion 66N2, and the opening portion 662H is set as follows.

When the protruding portions 672 are respectively fitted into the guide grooves 661 G, the first opening portions 6711 respectively face the opening portions 662H. When the protruding portions 672 are respectively fitted into the first recessed portions 66N1, the blocked portions 6713 respectively face the opening portions 662H. When the protruding portions 672 are respectively fitted into the second recessed portions 66N2, the second opening portions 6712 respectively face the opening portions 662H.

In the configuration example, a "first open state" refers to a state in which the first opening portion 6711 faces the opening portion 662H, a "second open state" refers to a state in which the second opening portion 6712 faces the opening portion 662H, and a "closed state" refers to a state in which the blocked portion 6713 faces the opening portion 662H.

In the configuration example, multiple opening portions 662H, multiple first opening portions 6711, and multiple second opening portions 6712 are provided. The multiple opening portions 662H are provided so as to be equally spaced apart from each other in the circumferential direction. Similarly, the multiple first opening portions 6711 are provided so as to be equally spaced apart from each other in the circumferential direction. Similarly, the multiple second opening portions 6712 are provided so as to be equally spaced apart from each other. Accordingly, when the rotator 67 receives oil pressure, the rotator 67 receives force which is substantially equally distributed in the circumferential direction. For this reason, the inclination of the cylinder axis of the knock housing 66 with respect to the cylinder axis of the rotator 67 is suppressed. As a result, the onset of so-called seizure of the rotator 67 to the knock housing 66 is prevented.

As illustrated in Fig. 3, the knock cam 68 includes a cylindrical portion 681 having a substantially cylindrical shape; a guided portion 682 protruding to the outside of the cylindrical portion 681 in the radial direction; the cam portion 683 formed on the first side of the cylindrical portion 681 in the axial direction.

A first side end portion of the plunger 64 of the solenoid unit 61 comes into contact with the second side of the cylindrical portion 681 (refer to Fig. 2).

The guided portion 682 is fitted into the guide groove 661 G of the knock housing 66. Accordingly, the knock cam 68 is guided by the guide grooves 661 G such that the knock cam 68 can be moved along the axial direction without being rotated in the circumferential direction.

As illustrated in Fig. 4, the cam portion 683 of the knock cam (straight moving portion) 68 is configured to include multiple first inclined surfaces (first inclined surfaces) 6831 and multiple second inclined surfaces 6832 which are inclined and are alternately disposed in the circumferential direction. The first inclined surface 6831 is formed such that the height of the first inclined surface 6831 protruding to the first side is decreased in the circumferential clockwise (CW) rotational direction. The second inclined surface 6832 is formed such that the height of the second inclined surface 6832 protruding to the first side is increased in the circumferential clockwise (CW) rotational direction. When the cam portion 683 comes into contact with the inclined surfaces (second inclined surfaces) 672T of the protruding portions 672 of the rotator (rotating member) 67, the cam portion 683 serves to rotate the rotator 67 in the circumferential direction.

As illustrated in Fig. 2, the first side of the spring 69 is in contact with the support member 55 of the second piston unit 50, and the second side of the spring 69 is in contact with the rotator 67. The spring 69 applies force to move the rotator 67, the knock cam 68, and the plunger 64 to the second side.

### Operation of Damping Force Adjusting Unit 60

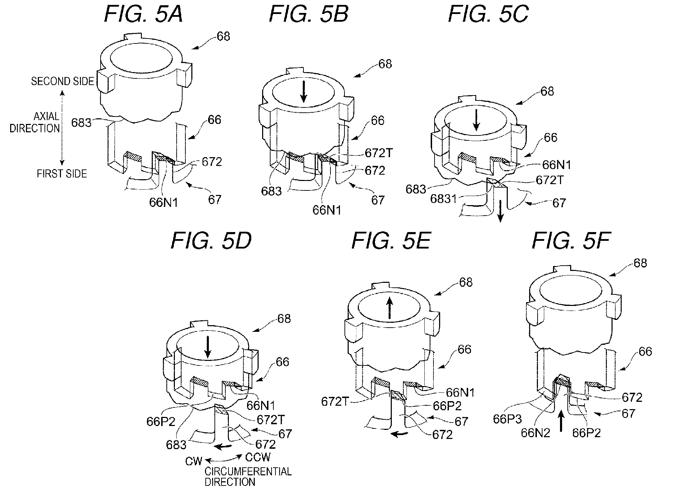

Figs. 5A to 5F are views illustrating the operation of the damping force adjusting unit 60.

Hereinafter, the operation of the damping force adjusting unit 60, when the rotator 67 of the knock cam mechanism unit 65 is rotated by the driving of the solenoid unit 61, will be described.

In the example illustrated in Fig. 5A, the protruding portions 672 are respectively fitted into the first recessed portions 66N1. In this case, in the configuration example, the blocked portions 6713 (refer to Fig. 3) respectively face the opening portions 662H.

The solenoid unit 61 is controlled such that the plunger 64 (refer to Fig. 2) is moved to the first side. Then, as illustrated in Fig. 5B, the cam portion 683 of the knock cam 68 comes into contact with the protruding portions 672.

The plunger 64 (refer to Fig. 2) is moved to the first side in the axial direction such that the knock cam 68 presses the rotator 67 to the first side. As illustrated in Fig. 5C, the first inclined surfaces 6831 of the knock cam 68 respectively come into contact with the inclined surfaces 672T of the protruding portions 672.

Each of the first inclined surfaces 6831 is inclined such that the height of the first inclined surface 6831 protruding to the first side is decreased in the clockwise (CW) rotational direction. In contrast, each of the inclined surfaces 672T is inclined such that the height of the inclined surface 672T protruding to the second side is decreased in a counter-clockwise (CCW) rotational direction. The solenoid unit 61 presses the knock cam 68 to the first side, and the spring 69 presses the rotator 67 to the second side. Accordingly, as illustrated in Fig. 5D, the inclined surfaces 672T of the rotor 67 respectively slide against the first inclined surfaces 6831. As a result, the rotator 67 is rotated in the clockwise (CW) rotational direction.

As illustrated in Fig. 5E, the inclined surfaces 672T respectively come into contact with the second protruding portions 66P2. Thereafter, the solenoid unit 61 (refer to Fig. 2) is controlled such that the knock cam 68 is moved to the second side.

The spring 69 applies force to move the rotator 67 to the second side. Each of the second protruding portions 66P2 is inclined such that the height of the second protruding portion 66P2 protruding to the first side is decreased in the clockwise (CW) rotational direction. Accordingly, as illustrated in Fig. 5E, the inclined surfaces 672T of the protruding portions 672 of the rotator 67 respectively slide against the second protruding portions 66P2. As a result, the rotator 67 is rotated in the clockwise (CW) rotational direction.

Finally, as illustrated in Fig. 5F, the protruding portions 672 are respectively fitted into the second recessed portions 66N2 such that the rotation of the rotator 67 is stopped. In this case, in the configuration example, the second opening portions 6712 respectively face the opening portions 662H.

Since the protruding portions 672 of the rotator 67 are respectively fitted into the second recessed portions 66N2, each of the protruding portions 672 is interposed between the second protruding portion 66P2 and the third protruding portion 66P3 which are respectively positioned on the counter-clockwise (CCW) rotational side and the clockwise (CW) rotational side of the protruding portion 672. Accordingly, the rotational position of the rotator 67 is fixed in this state. The axial position of the rotator 67 is fixed by the second recessed portions 66N2.

As described above, the solenoid unit 61 moves the knock cam 68 straight in the axial direction, resulting in the rotation of the rotator 67 in the circumferential direction. In the configuration example, upon one reciprocation of the knock cam 68 in the axial direction, the protruding portion 672 is moved from the first recessed portion 66N1 to the second recessed portion 66N2, and to the guide groove 661 G consecutively. That is, the rotator 67 is rotated by a predetermined amount of rotation along with the reciprocating movement of the plunger 64 of the solenoid unit 61. Any one of the first opening portion 6711, the second opening portion 6712, and the blocked portion 6713 is capable of facing the opening portion 662H.

### Operation of Hydraulic Shock Absorber 1

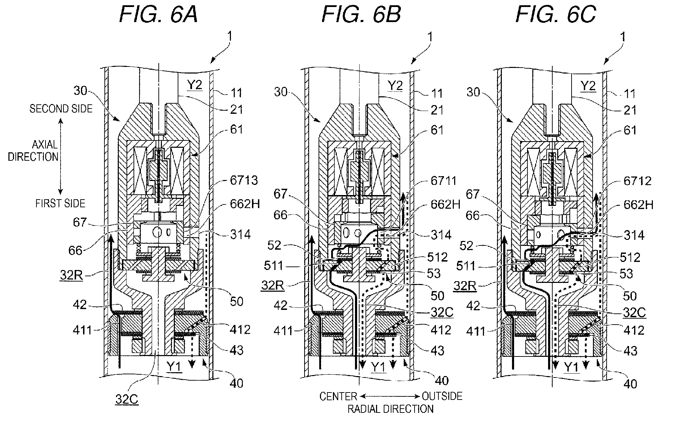

Figs. 6A to 6C are views illustrating the operation of the hydraulic shock absorber 1 in Configuration Example 1.

In Figs. 6A to 6C, the flowing of oil during a compression stroke is illustrated by the solid line, and the flowing of oil during an expansion stroke is illustrated by the dotted line. Fig. 6A is a view illustrating a case in which the damping force adjusting unit 60 is in the closed state. Fig. 6B is a view illustrating a case in which the damping force adjusting unit 60 is in the first open state. Fig. 6C is a view illustrating a case in which the damping force adjusting unit 60 is in the second open state.

### Closed State of Damping Force Adjusting Unit 60

First, the flowing of oil, when the damping force adjusting unit 60 is in the closed state, will be described. Hereinafter, the flowing of oil during a compression stroke, and the flowing of oil during an expansion stroke will be sequentially described.

### During Compression Stroke

When the piston unit 30 moves to the first side in the axial direction with respect to the cylinder 11, the internal pressure of the first oil chamber Y1 is increased. As illustrated by the solid line arrow in Fig. 6A, oil in the first oil chamber Y1 flows into the first compression side oil paths 411. The oil flowing into the first compression side oil paths 411 opens the first compression side damping valve 42, and flows into the second oil chamber Y2. During a compression stroke, damping force is generated due to resistance caused by the flowing of the oil through the first compression side oil paths 411 and the first compression side damping valve 42.

When the damping force adjusting unit 60 is in the closed state, the blocked portions 6713 respectively face the opening portions 662H. Accordingly, in the closed state, oil does not pass through the hollow portion 32C (the second piston unit 50).

As illustrated in Fig. 1, the pressure of oil in the first oil chamber Y1 is increased by the movement of the piston unit 30 to the first side in the axial direction, and the pressurized oil flows into the compression side oil paths 711 through the oil holes 722R of the expansion side valve 722 in the bottom valve unit 70. The oil flowing into the compression side oil paths 711 presses and opens the compression side valve 721, and flows into the reservoir chamber R.

### During Expansion Stroke

When the piston unit 30 moves to the second side in the axial direction with respect to the cylinder 11, the internal pressure of the second oil chamber Y2 is increased. As illustrated by the dotted line arrow in Fig. 6A, oil in the second oil chamber Y2 flows into the first expansion side oil paths 412. The oil flowing into the first expansion side oil paths 412 opens the first expansion side damping valve 43, and flows into the first oil chamber Y1. During an expansion stroke, damping force is generated due to resistance caused by the flowing of the oil through the first expansion side oil paths 412 and the first expansion side damping valve 43.

As illustrated in Fig. 1, the pressure of oil in the second oil chamber Y2 in the bottom valve unit 70 is increased by the movement of the piston unit 30 to the second side in the axial direction, and is relatively low compared to the pressure of oil in the reservoir chamber R. As a result, oil in the reservoir chamber R flows into the expansion side oil paths 712. The oil flowing into the expansion side oil paths 712 presses and opens the expansion side valve 722, and flows into the first oil chamber Y1.

As described above, when the damping force adjusting unit 60 is in the closed state, damping force is mainly generated by the first piston unit 40.

### First Open State of Damping Force Adjusting Unit 60

Hereinafter, the flowing of oil, when the damping force adjusting unit 60 is in the first open state, will be described.

As illustrated in Fig. 6B, in the first open state, the first opening portions 6711 respectively face the opening portions 662H. Accordingly, in the first open state, oil flows through the second piston unit 50. The flowing of oil through the first piston unit 40, and the flowing of oil through the bottom valve unit 70 are the same as those in the aforementioned closed state. Therefore, the following description will focus on the flowing of oil through the second piston unit 50.

### During Compression Stroke

When the piston unit 30 moves to the first side in the axial direction with respect to the cylinder 11, the internal pressure of the first oil chamber Y1 is increased. As illustrated by the solid line arrow in Fig. 6B, in the first open state, oil flows through the first piston unit 40 and the second piston unit 50. First, oil from the first oil chamber Y1 flows into the hollow portion 32C in the second piston unit 50. The oil flowing into the hollow portion 32C flows into the second compression side oil paths 511. The oil flowing into the second compression side oil paths 511 opens the second compression side damping valve 52, and flows into the knock housing 66. Thereafter, the oil flows into the second oil chamber Y2 via the first opening portions 6711, the opening portions 662H, and the opening portions 314.

In the second piston unit 50, damping force is generated due to resistance caused by the flowing of oil through the second compression side oil paths 511 and the second compression side damping valve 52. Also in the damping force adjusting unit 60, a predetermined damping force is generated due to the oil flow restriction of the first opening portions 6711 when oil flows through the first opening portions 6711.

### During Expansion Stroke

When the piston unit 30 moves to the second side in the axial direction with respect to the cylinder 11, the internal pressure of the second oil chamber Y2 is increased. As illustrated by the dotted line arrow in Fig. 6B, in the first open state, oil flows through the first piston unit 40 and the second piston unit 50. First, with regard to the flowing of oil in the second piston unit 50, oil in the second oil chamber Y2 flows into the knock housing 66 via the opening portions 314, the opening portions 662H, and the first opening portions 6711. The oil flows into the second expansion side oil paths 512. The oil flowing into the second expansion side oil paths 512 opens the second expansion side damping valve 53, and flows into the hollow portion 32C. Finally, the oil flows into the first oil chamber Y1.

In the second piston unit 50, damping force is generated due to the resistance caused by the flowing of oil through the second expansion side oil paths 512 and the second expansion side damping valve 53. Also, in the damping force adjusting unit 60, a predetermined damping force is generated due to the oil flow restriction of the first opening portions 6711 when oil flows through the first opening portions 6711.

As described above, in the first open state, damping force is generated by the flowing of oil through each of the first piston unit 40 and the second piston unit 50. In Configuration Example 1, the flowing of oil through the first piston unit 40 is parallel to the flowing of oil through the second piston unit 50. Accordingly, the damping force generated in the first open state is small compared to that in the aforementioned closed state.

### Second Open State of Damping Force Adjusting Unit 60

Hereinafter, the flowing of oil, when the damping force adjusting unit 60 is in the second open state, will be described.

In Fig. 6C, the flowing of oil during a compression stroke is illustrated by the solid line arrow, and the flowing of oil during an expansion stroke is illustrated by the dotted line arrow. Basically, the flowing of oil in the second open state is the same as the flowing of oil in the first open state. As illustrated in Fig. 6C, when the damping force adjusting unit 60 is in the second open state, the second opening portions 6712 respectively face the opening portions 662H. The sectional oil flow path area of the second opening portion 6712 is smaller than that of the first opening portion 6711. Accordingly, the damping force generated by the flowing of oil through the damping force adjusting unit 60 in the second open state is large compared to that in the first open state. As a result, the damping force generated by the hydraulic shock absorber 1 in the second open state is large compared to that in the first open state.

As described above, the hydraulic shock absorber 1 in the configuration example is capable of generating damping force in at least three stages according to the rotational position of the rotator 67 of the knock cam mechanism unit 65.

More specifically, according to the rotational position of the rotator 67, the knock cam mechanism unit (changing unit) 65 changes the flow direction of oil between the flowing of oil through the first compression side oil paths (the first flow paths) 411 and the first expansion side oil paths (the first flow paths) 412 of the first piston unit 40 and the flowing of oil through the first compression side oil paths (the first flow paths) 411, the first expansion side oil paths (the first flow paths) 412, the second compression side oil paths (the third flow paths) 511 of the second piston unit 50, and the second expansion side oil paths (the third flow paths) 512 of the second piston unit 50. The knock cam mechanism unit (changing unit) 65 changes the sectional flow path area (the first opening portion 6711, the second opening portion 6712, and the blocked portion 6713) of the hollow portion (the second flow path) 32C through which oil flows according to the rotational position of the rotator 67.

The magnitude of generated damping force can be changed by rotating the rotator 67 by the predetermined amount of rotation upon one reciprocation of the plunger 64 of the solenoid unit 61. For this reason, the rotational position of the rotator 67 with respect to the knock housing 66 can be reliably determined. As a result, the hydraulic shock absorber 1 in Configuration Example 1 is capable of stably generating damping force.

The solenoid unit 61 is energized only during the rotation of the rotator 67. That is, after the rotator 67 is positioned at a predetermined rotational position, it is not necessary to energize the solenoid unit 61. In contrast, the rotational position of the rotator 67 is maintained by the knock housing 66 meshing with the rotator 67. Accordingly, the hydraulic shock absorber 1 in Configuration Example 1 is capable of maintaining the state of the rotator 67, even if electrical power is not supplied to an electronic drive source such as the solenoid unit 61.

### Detection of Rotational Position of Rotator 67

Hereinafter, detection of the rotational position of the rotator 67 will be described. As described above, in the configuration example, the damping force adjusting unit 60 is configured to switch between the closed state, the first open state, and the second open state according to the rotational position of the rotator 67. Accordingly, detection of the rotational position of the rotator 67 is required to control the damping force adjusting unit 60.

In the configuration example, the knock cam mechanism unit 65 is driven by the solenoid unit 61. The solenoid unit 61 includes the coil 63 and the plunger 64. The controller (detection unit) (not illustrated) is connected to electric power lines through which the coil 63 of the solenoid unit 61 is energized. The hydraulic shock absorber 1 in the configuration example is configured to detect the rotational position of the rotator (changing portion) 67 based on electromagnetic force determined by a positional relationship between the coil 63 and the plunger 64. Hereinafter, specific description will be given.

First, as described with reference to Fig. 4, the axial depths of the first recessed portion 66N1, the second recessed portion 66N2, and the guide groove 661 G are different from each other. Accordingly, the axial position of the knock cam 68 coming into contact with the rotator 67 is changed whenever the protruding portion 672 is fitted into any one of the first recessed portion 66N1, the second recessed portion 66N2, and the guide groove 661 G. In the configuration example, the knock cam 68 is in contact with the plunger 64.

The inductance of the coil 63 is changed according to the position of the plunger 64 with respect to the coil 63. In the configuration example, the rotational position of the rotator 67 is indirectly detected based on a change in the electromagnetic force (for example, the amount of current) of the coil 63.

Specifically, a certain amount of sensor current flows through the coil 63, and the amount of sensor current is set to such an extent that the plunger 64 is not moved. The difference in the amount of current flowing through the coil 63 occurs according to the relative position between the coil 63 and the plunger 64. It is possible to indirectly detect the rotational position of the rotator 67 based on the amount of current.

The amount of current, when the protruding portions 672 are respectively fitted into the guide grooves 661 G, is obtained as the reference amount of current in advance. It is determined whether or not the rotator 67 is fitted into the guide groove 661 G, based on the actual amount of current detected at the coil 63 during an actual operation of the hydraulic shock absorber 1 and the reference amount of current obtained in advance. Similarly, it is possible to obtain the position of the rotator 67 based on the value of inductance when the protruding portion 672 is fitted into the first recessed portion 66N1 or the second recessed portion 66N2.

As described above, the hydraulic shock absorber 1 in the configuration example does not require the provision of a separate special sensor for detecting the position of the rotator 67, and is capable of detecting the rotational position of the rotator 67 using the solenoid unit 61 which is already provided.

### Configuration Example 2

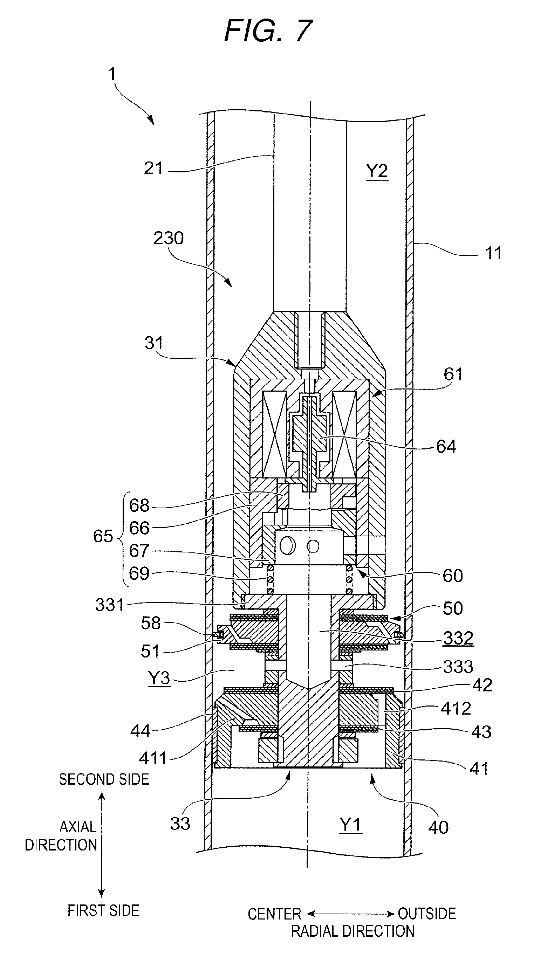

Fig. 7 is a sectional view of a piston unit 230 in Configuration Example 2.

Hereinafter, the hydraulic shock absorber 1 in Configuration Example 2 will be described. In Configuration Example 2, the same reference signs are assigned to the same members as in Configuration Example 1, and detailed description thereof will be omitted.

First, the schematic configuration of the hydraulic shock absorber 1 in Configuration Example 2 will be described.

As illustrated in Fig. 7, the hydraulic shock absorber (pressure shock absorber) 1 in Configuration Example 2 includes the cylinder 11 accommodating oil (fluid); the piston ring (partitioning portion) 44 that is provided so as to be capable of being moved in the cylinder 11 in the axial direction, and partitions the inner space of the cylinder 11 into the first oil chamber (first chamber) Y1 and the second oil chamber (second chamber) Y2; the first piston (flow path forming portion) 41 that forms the first compression side oil path (first flow path) 411 and the first expansion side oil path (first flow path) 412 through which the oil flows along with the movement of the piston ring 44; a first compression side damping valve 42 and a first expansion side damping valve 43 which control the flowing of the oil through the first compression side oil path 411 and the first expansion side oil path 412; a hollow portion (second flow path) 332 and a radial flow path (second flow path) 333 which form an oil flow passage different from the first compression side oil path 411 and the first expansion side oil path 412 of the first piston 41; the plunger (forward and rearward moving portion) 64 that is moved forward and rearward along one direction; and the knock cam mechanism unit (changing unit) 65 that includes the rotator 67 rotated by a predetermined amount of rotation along with the forward and rearward movement of the plunger 64, and changes the flow direction of the oil in the hollow portion 332 and the radial flow path 333. Hereinafter, each of these configuration elements will be described in detail.

The piston unit 230 includes the first housing 31; a piston holding portion 33 provided on the first side of the first housing 31; the first piston unit 40 provided on the first side of the piston holding portion 33; the second piston unit 50 provided on the second side of the piston holding portion 33; and the damping force adjusting unit 60 provided on the inside of the first housing 31 and on the second side of the second piston unit 50.

In Configuration Example 2, the piston holding portion 33 is provided instead of the second housing 32 in Configuration Example 1. In Configuration Example 2, the first piston unit 40 and the second piston unit 50 are fixed to the piston holding portion 33. The first piston unit 40 and the second piston unit 50 are disposed in series in the flow direction of oil.

In Configuration Example 2, a piston ring 58 is formed in an outer circumferential portion of the second piston 51 of the second piston unit 50. The piston ring 58 seals the gap between the cylinder 11 and the second piston 51. The piston ring 58 improves slidability of the second piston 51 with respect to the cylinder 11 when the second piston 51 moves in the axial direction with respect to the cylinder 11.

In Configuration Example 2, the first oil chamber Y1 is formed on the first side of the first piston unit 40, and the second oil chamber Y2 is formed on the second side of the second piston unit 50. A third oil chamber Y3 is formed between the first piston unit 40 and the second piston unit 50.

The piston holding portion 33 includes a housing connecting portion 331; the hollow portion 332 formed in the axial direction; and the radial flow path 333.

The housing connecting portion 331 forms a connecting portion connected to a first side end portion of the first housing 31. The piston holding portion 33 is fixed to the first housing 31 via the housing connecting portion 331.

The hollow portion 332 is formed to extend toward the first side from a second side end portion to the middle of the piston holding portion 33. The hollow portion 332 communicates with the inside of the knock housing 66 and the inside of the rotator 67 on the second side.

The radial flow path 333 is a through hole passing through the piston holding portion 33 from the center to the outside in the radial direction. The radial flow path 333 is formed between the first piston unit 40 and the second piston unit 50 in the axial direction of the piston holding portion 33. A first end opening of the radial flow path 333 communicates with the hollow portion 332, and a second end opening of the radial flow path 333 communicates with the third oil chamber Y3.

### Operation of Hydraulic Shock Absorber 1 in Configuration Example 2

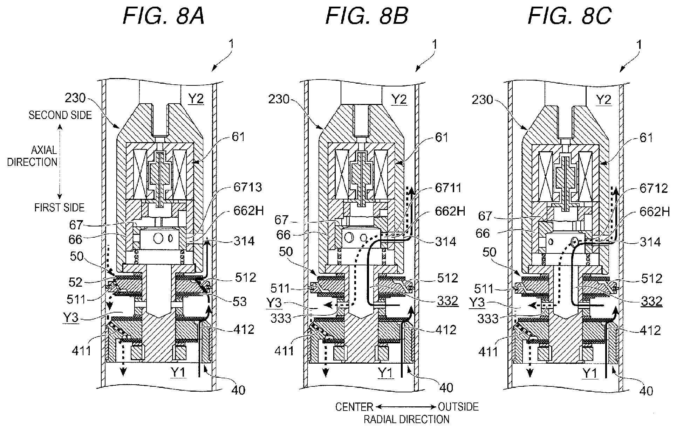

Figs. 8A to 8C are views illustrating the operation of the hydraulic shock absorber 1 in Configuration Example 2.

In Figs. 8A to 8C, the flowing of oil during a compression stroke is illustrated by the solid line arrow, and the flowing of oil during an expansion stroke is illustrated by the dotted line arrow. Fig. 8A is a view illustrating the closed state. Fig. 8B is a view illustrating the first open state. Fig. 8C is a view illustrating the second open state.

### Closed State of Damping Force Adjusting Unit 60

As illustrated in Fig. 8A, when the damping force adjusting unit 60 is in the closed state, during a compression stroke and an expansion stroke, oil flows through both the first piston unit 40 and the second piston unit 50. For a flow of oil, damping force is generated by both the first piston unit 40 and the second piston unit 50.

### First Open State of Damping Force Adjusting Unit 60

As illustrated in Fig. 8B, when the damping force adjusting unit 60 is in the first open state, during a compression stroke and an expansion stroke, the first opening portions 6711 respectively face the opening portions 662H. Accordingly, oil flows through the first opening portions 6711. More specifically, during the compression stroke and the expansion stroke, oil flows between the second oil chamber Y2 and the third oil chamber Y3 via the opening portions 314, the opening portions 662H, and the first opening portions 6711. That is, oil flow passes around the second piston unit 50.

As a result, in the hydraulic shock absorber 1 in the first open state, damping force is mainly generated by the first piston unit 40. The damping force in this case is smaller than that in the aforementioned closed state.

### Second Open State of Damping Force Adjusting Unit 60

As illustrated in Fig. 8C, when the damping force adjusting unit 60 is in the second open state, during a compression stroke and an expansion stroke, the second opening portions 6712 respectively face the opening portions 662H. Accordingly, oil flows through the second opening portions 6712. The flowing of oil in this case is the same as that in the first open state. The sectional flow path area of the second opening portion 6712 is smaller than that of the first opening portion 6711. Accordingly, the damping force caused by the flowing of oil through the damping force adjusting unit 60 in the second open state is large compared to that in the aforementioned first open state.

As a result, the damping force generated by the hydraulic shock absorber 1 in the second open state is large compared to that in the aforementioned first open state.

As described above, the hydraulic shock absorber 1 in Configuration Example 2 is capable of generating damping force in at least three stages.

The magnitude of generated damping force can be changed by rotating the rotator 67 by a predetermined amount of rotation upon one reciprocation of the plunger 64 of the solenoid unit 61. For this reason, the rotational position of the rotator 67 with respect to the knock housing 66 can be reliably determined. As a result, the hydraulic shock absorber 1 in Configuration Example 2 is also capable of stably generating damping force.

### Configuration Example 3

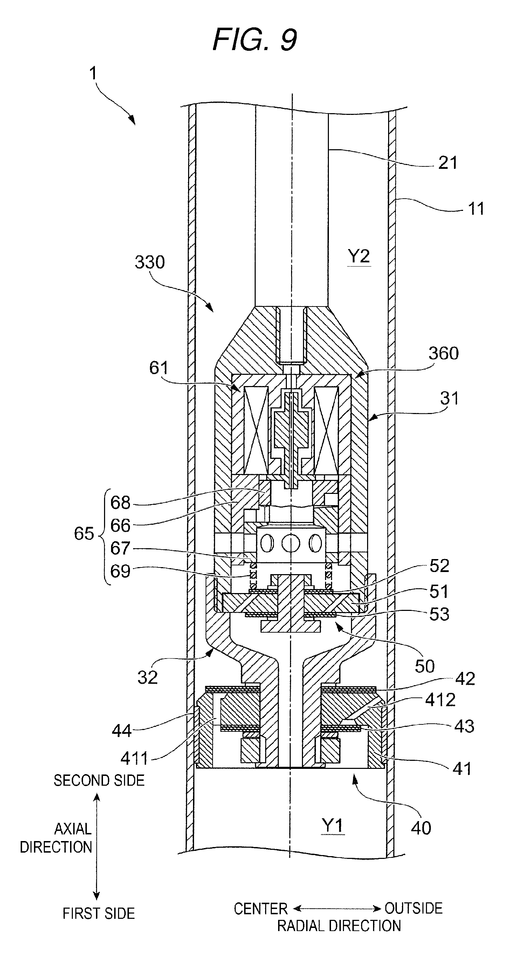

Fig. 9 is a sectional view of a piston unit 330 in Configuration Example 3.

Hereinafter, the hydraulic shock absorber 1 in Configuration Example 3 will be described. In Configuration Example 3, the same reference signs are assigned to the same members as in Configuration Example 1, and detailed description thereof will be omitted.

First, the schematic configuration of the hydraulic shock absorber 1 in Configuration Example 3 will be described.

As illustrated in Fig. 9, the hydraulic shock absorber (pressure shock absorber) 1 in Configuration Example 3 includes the cylinder 11 accommodating oil (fluid); the piston ring (partitioning portion) 44 that is provided so as to be capable of being moved in the cylinder 11 in the axial direction, and partitions the inner space of the cylinder 11 into the first oil chamber (first chamber) Y1 and the second oil chamber (second chamber) Y2; the first piston (flow path forming portion) 41 that forms the first compression side oil path (first flow path) 411 and the first expansion side oil path (first flow path) 412 through which the oil flows along with the movement of the piston ring 44; the first compression side damping valve 42 and the first expansion side damping valve 43 which control the flowing of the oil through the first compression side oil path 411 and the first expansion side oil path 412; the plunger (forward and rearward moving portion) 64 that is moved forward and rearward along one direction; and the knock cam mechanism unit (damping force changing unit) 65 that includes the rotator 67 rotated along with the forward and rearward movement of the plunger 64, and the knock housing (maintaining portion) 66 maintaining the position of the rotator 67, and changes the magnitude of generated damping force according to the position of the rotator 67. Hereinafter, each of these configuration elements will be described in detail.

The piston unit 330 includes the first housing 31; the second housing 32; the first piston unit 40; the second piston unit 50; and a damping force adjusting unit 360. That is, the piston unit 330 in Configuration Example 3 is different from the piston unit 30 in Configuration Example 1 in that the piston unit 330 is provided with the damping force adjusting unit 360. The following description will focus on the damping force adjusting unit 360.

### Damping Force Adjusting Unit 360

The damping force adjusting unit 360 includes the solenoid unit 61, and the knock cam mechanism unit 65 provided on the first side of the solenoid unit 61 and on the second side of the second piston unit 50.

In Configuration Example 3, the spring 69 of the knock cam mechanism unit 65 is in contact with the second side of the second compression side damping valve 52 of the second piston unit 50. In Configuration Example 3, the knock cam mechanism unit 65 directly presses the second compression side damping valve 52 of the second piston unit 50, thereby adjusting damping force generated by the second compression side damping valve 52. Specifically, the rotator 67 in Configuration Example 3 is moved forward and rearward with respect to the second compression side damping valve 52 according to the rotational position of the rotator 67, resulting in a change in generated damping force.

As described with reference to Fig. 4, the axial groove depths of the first recessed portion 66N1, the second recessed portion 66N2, and the guide groove 661 G of the knock housing 66 are different from each other. In Configuration Example 3, the first recessed portion 66N1, the second recessed portion 66N2, and the guide groove 661 G (position fixing portions) fix the position of the rotator (damping force changing portion) 67 in the axial direction (forward and rearward direction).

Specifically, the guide groove 661 G is formed to have the largest axial depth. For this reason, when the protruding portions 672 are respectively fitted into the guide grooves 661 G, the amount of protrusion of the rotator 67 to the first side in the axial direction is the smallest amount.

The second recessed portion 66N2 is formed to have the smallest axial depth. For this reason, when the protruding portions 672 are respectively fitted into the second recessed portions 66N2, the amount of protrusion of the rotator 67 to the first side in the axial direction is the largest amount. The first recessed portion 66N1 is formed to have an axial depth between the axial depth of the second recessed portion 66N2 and the axial depth of the guide groove 661 G. For this reason, when the protruding portions 672 are respectively fitted into the first recessed portions 66N1, the amount of protrusion of the rotator 67 to the first side in the axial direction is smaller than that a situation of when the protruding portions 672 are respectively fitted into the second recessed portions 66N2, and is larger than that a situation of when the protruding portions 672 are respectively fitted into the guide grooves 661 G.

The hydraulic shock absorber 1 with the aforementioned configuration in Configuration Example 3 is capable of adjusting damping force generated by the second piston unit 50 during a compression stroke using the damping force adjusting unit 360. That is, the knock cam 68 is moved in the axial direction by the solenoid unit 61. The rotator 67 is rotated in the circumferential direction along with the axial movement of the knock cam 68. At this time, according to the amount of protrusion of the protruding portion 672, the rotator 67 changes the magnitude of pressing force, which is applied to the second compression side damping valve 52, via the spring 69. Accordingly, it is possible to change the degree of easiness for the second compression side damping valve 52 to open the second compression side oil paths 511. As a result, in Configuration Example 3, it is possible to change the damping force generated by the second piston unit 50.

The magnitude of generated damping force can be changed by moving the rotator 67 in the axial direction by a predetermined amount of movement upon one reciprocation of the plunger 64 of the solenoid unit 61. The axial position of the rotator 67 with respect to the second compression side damping valve 52 can be reliably determined.

As a result, the hydraulic shock absorber 1 in Configuration Example 3 is capable of stably generating damping force.

### Configuration Example 4

Hereinafter, the hydraulic shock absorber 1 in Configuration Example 4 will be described.

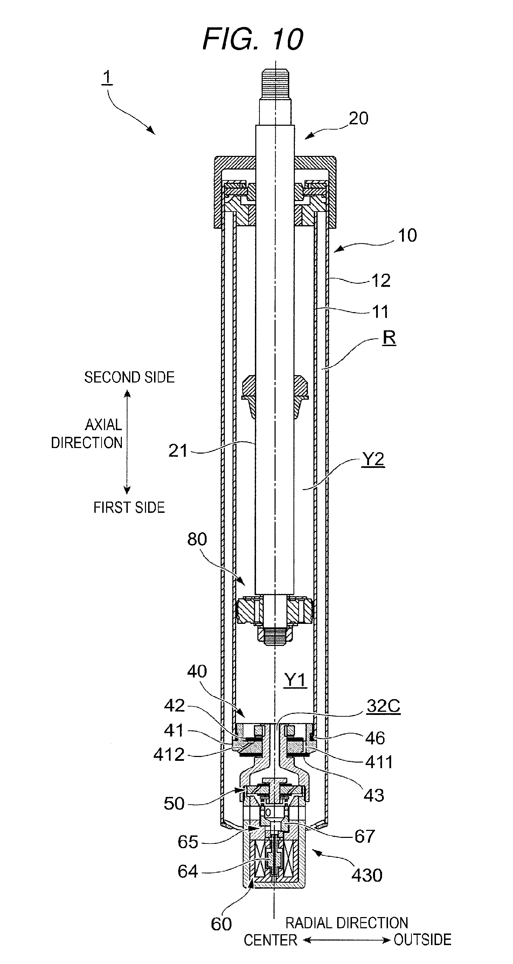

Fig. 10 is a view illustrating the entire configuration of the hydraulic shock absorber 1 in Configuration Example 4.

In Configuration Example 4, the same reference signs are assigned to the same configuration elements as in the aforementioned configuration examples, and detailed description thereof will be omitted.

First, the hydraulic shock absorber 1 in Configuration Example 4 will be schematically described.

As illustrated in Fig. 10, the hydraulic shock absorber (pressure shock absorber) 1 in Configuration Example 4 includes the cylinder 11 accommodating oil (fluid); a piston unit (partitioning portion) 80 that is provided so as to be capable of being moved in the cylinder 11 in the axial direction, and partitions the inner space of the cylinder 11 into the first oil chamber (first chamber) Y1 and the second oil chamber (second chamber) Y2; the first piston (flow path forming portion) 41 that forms the first compression side oil path (first flow path) 411 and the first expansion side oil path (first flow path) 412 through which the oil flows along with the movement of the piston unit 80; the first compression side damping valve 42 and the first expansion side damping valve 43 which control the flowing of the oil through the first compression side oil path 411 and the first expansion side oil path 412; the hollow portion (second flow path) 32C that forms an oil flow passage different from the first compression side oil path 411 and the first expansion side oil path 412 of the first piston 41; the plunger (forward and rearward moving portion) 64 that is moved forward and rearward along one direction; and the knock cam mechanism unit (changing unit) 65 that includes the rotator 67 rotated by a predetermined amount of rotation along with the forward and rearward movement of the plunger 64, and changes the flow direction of oil in the hollow portion 32C.

As illustrated in Fig. 10, the hydraulic shock absorber 1 in Configuration Example 4 includes the piston unit 80 instead of the piston unit 30 in Configuration Example 1, and a bottom valve unit 430 instead of the bottom valve unit 70 in Configuration Example 1.

The piston unit 80 is mounted to a first side end portion of the rod member 21. The piston unit 80 causes oil to flow between the first oil chamber Y1 and the second oil chamber Y2 and between the first oil chamber Y1 and the reservoir chamber R along with the movement of the rod member 21 to the first side and the second side.

The bottom valve unit 430 has the same basic configuration as that of the piston unit 30 in Configuration Example 1. The bottom valve unit 430 is provided in first side end portions of the cylinder 11 and the outer cylindrical body 12.

The bottom valve unit 430 does not include the piston ring 44, and is provided with a sealing member 46. The sealing member 46 seals the gap between the cylinder 11 and the first piston 41.

The hydraulic shock absorber 1 with the aforementioned configuration in Configuration Example 4 is also capable of changing damping force, which is generated along with the movement of the piston unit 80, using the bottom valve unit 430 with a simple configuration.

### Configuration Example 5

Hereinafter, the hydraulic shock absorber 1 in Configuration Example 5 will be described.

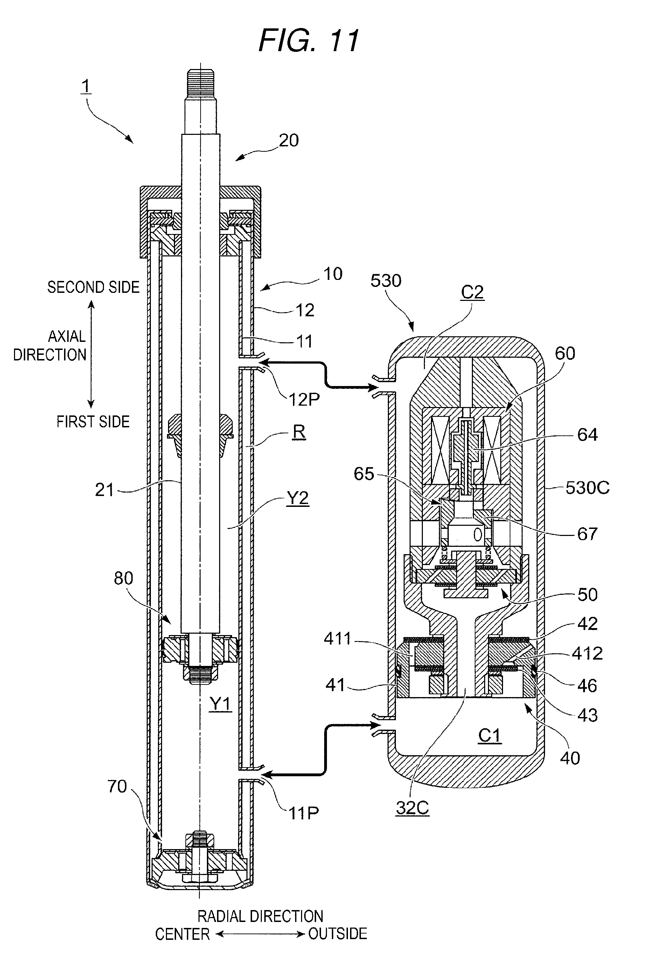

Fig. 11 is a view illustrating the entire configuration of the hydraulic shock absorber 1 in Configuration Example 5.

In Configuration Example 5, the same reference signs are assigned to the same configuration elements as in the aforementioned configuration examples, and detailed description thereof will be omitted.

The hydraulic shock absorber 1 in Configuration Example 5 includes a damping force generating unit 530. The damping force generating unit 530 has the same basic configuration as that of the piston unit 30 in Configuration Example 1. The damping force generating unit 530 is provided separately from the cylinder unit 10, and includes a second cylinder 530C accommodating oil.

The schematic configuration of the hydraulic shock absorber 1 in Configuration Example 5 will be described.

As illustrated in Fig. 11, the hydraulic shock absorber (pressure shock absorber) 1 in Configuration Example 5 includes the cylinder 11 accommodating oil (fluid); the piston unit (partitioning portion) 80 that is provided so as to be capable of being moved in the cylinder 11 in the axial direction, and partitions the inner space of the cylinder 11 into the first oil chamber (first chamber) Y1 and the second oil chamber (second chamber) Y2; the first piston (flow path forming portion) 41 that forms the first compression side oil path (first flow path) 411 and the first expansion side oil path (first flow path) 412 through which the oil flows along with the movement of the piston unit 80; the first compression side damping valve 42 and the first expansion side damping valve 43 which control the flowing of the oil through the first compression side oil path 411 and the first expansion side oil path 412; the hollow portion (second flow path) 32C that forms an oil flow passage different from the first compression side oil path 411 and the first expansion side oil path 412 of the first piston 41; the plunger (forward and rearward moving portion) 64 that is moved forward and rearward along one direction; and the knock cam mechanism unit (changing unit) 65 that includes the rotator 67 rotated by a predetermined amount of rotation along with the forward and rearward movement of the plunger 64, and changes the flow direction of oil in the hollow portion 32C.

As illustrated in Fig. 11, the damping force generating unit 530 does not include the piston ring 44, and is provided with the sealing member 46. The sealing member 46 seals the gap between the second cylinder 530C and the first piston 41. A first external oil chamber C1 is formed on the first side of the first piston unit 40, and a second external oil chamber C2 is formed on the second side of the first piston unit 40.

The first external oil chamber C1 is connected to a communication port 11P communicating with the first oil chamber Y1 of the cylinder 11. In the configuration example, the second external oil chamber C2 is connected to a communication port 12P communicating with the second oil chamber Y2 of the cylinder 11.

The hydraulic shock absorber 1 with the aforementioned configuration in Configuration Example 5 is also capable of changing damping force, which is generated along with the movement of the piston unit 80, using the damping force generating unit 530 with a simple configuration.

Configuration Examples 1 to 5 adopts a configuration in which the solenoid unit 61 is provided on the inside of the piston unit 30 (the piston unit 230, the piston unit 330, the bottom valve unit 430, and the damping force generating unit 530). However, the solenoid unit 61 may be provided separately from the piston unit 30 or the cylinder 11. In this case, it is considered that transmission means is provided to transmit straight movement of the solenoid unit 61 to the knock cam 68 in the axial direction of the rod member 21. A mechanism generating a straight movement is not limited to a solenoid mechanism, and other mechanisms such as a ball screw may be used.

The shape of the first opening portion 6711 and the like provided in the rotator 67 is not limited to the shape in the aforementioned configuration examples. The rotor 67 may be provided with the first opening portion 6711 and the like formed along the circumferential direction, or a groove, the opening width of which is changed in the circumferential direction.

In Configuration Examples 1 to 5, the hydraulic shock absorber 1 has a so-called duplex-wall pipe structure; however, the structure is not limited to a duplex-wall pipe structure, and may be a so-called triple-wall pipe structure. The structure of the bottom valve unit 70 in Configuration Examples 1 to 3 and Configuration Example 5, and the structure of the piston unit 80 in Configuration Examples 4 and 5 are not limited to the structures in the configuration examples, and other shapes and functions may adopted insofar as the bottom valve unit 70 and the piston unit 80 with the other shapes and functions satisfy the function of a damping mechanism.

The description of embodiments may disclose the following matters.
[1] It is a pressure shock absorber including: a cylinder configured to accommodate a fluid; a partitioning portion that is provided so as to be capable of being moved in the cylinder in an axial direction, and partitions an inner space of the cylinder into a first chamber and a second chamber; a flow path forming portion configured to form a flow path through which the fluid flows along with the movement of the partitioning portion; a valve configured to control the flowing of the fluid through the flow path; a forward and rearward moving portion that is moved forward and rearward along one direction; and a damping force changing unit that includes a rotator rotated along with the forward and rearward movement of the forward and rearward moving portion, and a maintaining portion maintaining a position of the rotator, and changes magnitude of generated damping force according to the position of the rotator.
[2] It may be the pressure shock absorber according to [1], in which the rotator is moved forward and rearward with respect to the valve according to a rotational position of the rotator.
[3] It may be the pressure shock absorber according to [2], in which the damping force changing unit further includes a position fixing portion that fixes the position of the rotator in a forward and rearward direction of the rotator.

## Claims

1. A pressure shock absorber comprising:
a cylinder configured to accommodate a fluid;
a partitioning portion that is provided so as to be capable of being moved in the cylinder in an axial direction, and partitions an inner space of the cylinder into a first chamber and a second chamber;
a flow path forming portion configured to form a first flow path through which the fluid flows along with the movement of the partitioning portion;
a valve configured to control the flowing of the fluid through the first flow path;
a second flow path configured to form a fluid flow passage different from the first flow path of the flow path forming portion;
a forward and rearward moving portion that is moved forward and rearward along one direction; and
a changing unit that includes a rotator rotated by a predetermined amount of rotation along with the forward and rearward movement of the forward and rearward moving portion, and changes a flow direction of the fluid in the second flow path.

2. The pressure shock absorber according to claim 1,
wherein the changing unit further includes a rotation fixing portion that fixes a rotational position of the rotator.

3. The pressure shock absorber according to claim 1,
wherein the changing unit changes a sectional flow path area of the second flow path, through which the fluid flows, according to a rotational position of the rotator.

4. The pressure shock absorber according to claim 1, further comprising:
a second flow path forming portion configured to form a third flow path which is different from the first flow path and the second flow path, and through which the fluid flows; and
a second valve configured to control the flowing of the fluid through the third flow path,
wherein the changing unit changes the flow direction of the fluid between the flowing of the fluid through the first flow path and the flowing of the fluid through the first flow path and the third flow path according to a rotational position of the rotator.

5. The pressure shock absorber according to claim 1,
wherein the changing unit includes a straight moving portion configured to include a first inclined surface that is inclined, and to move straight along with the forward and rearward movement of the forward and rearward moving portion, and
wherein the rotator includes a second inclined surface that is inclined in a circumferential direction of the rotator and comes into contact with the first inclined surface, and at least one opening portion through which the fluid flows in the second flow path.

6. The pressure shock absorber according to claim 5,
wherein the rotator is formed into a cylindrical shape, and includes a plurality of the opening portions which are disposed so as to be equally spaced apart from each other in the circumferential direction.

7. The pressure shock absorber according to claim 1,
wherein the forward and rearward moving portion includes a coil and a plunger, and
wherein a detection unit is further provided to detect the rotational position of the rotator based on electromagnetic force determined by a positional relationship between the coil and the plunger.
